# EUROPÄISCHE PATENTSCHRIFT

(11) **EP 0 648 707 B1**
(45) Veröffentlichungstag und Bekanntmachung des Hinweises auf die Patenterteilung: **03.09.1997**
(21) Anmeldenummer: 94250247.7
(22) Anmeldetag: 12.10.1994
(51) Int. Cl.: B66F 9/07, B65G 1/00

(54) **Sicherheitsvorrichtung für Regallager, insbesondere Stollenlager**
Safety device for shelve store, particularly gallery-storage
Dispositif de sécurité pour rayonnages, particulièrement pour galeries de stockage

(30) Priorität: 14.10.1993 DE 4335644
(43) Veröffentlichungstag der Anmeldung: 19.04.1995
(73) Patentinhaber: MANNESMANN Aktiengesellschaft, 40213 Düsseldorf (DE)
(72) Erfinder: Becke, Theobald, D-58300 Wetter (DE)
(74) Vertreter: Presting, Hans-Joachim, Dipl.-Ing.

(56) Entgegenhaltungen:
- DE-B- 1 291 286
- GB-A- 2 101 574
- US-A- 3 503 530
- US-A- 3 762 531
- US-A- 5 141 380

## Beschreibung

Die Erfindung betrifft eine Sicherheitsvorrichtung für Regallager mit einem auf einem Fahrweg an einem Regal entlangfahrbaren Verteilfahrzeug gemäß dem Oberbegriff des Anspruches 1.

Aus der DE 39 15 681 A1 ist eine Sicherheitsvorrichtung für Regal Lager mit einer oder mehreren Lagergassen bekannt. In den Lagergassen sind ferngesteuerte Verteilfahrzeuge oder Verteilfahrzeuge mit eingeschränkter Sicht des Fahrers verfahrbar. Zur Vermeidung von Zusammenstößen von Verteilfahrzeugen untereinander sowie von den Verteilfahrzeugen mit Personen oder gegenständlichen Hindernissen sind im Bereich der Öffnungen der Lagergassen Sensoren in Form von Lichtschranken angeordnet, die bei Auslösung entsprechende Bremssignale an die Verteilfahrzeuge liefern. Die Sensoren sind derart ausgebildet, daß zwischen Personen, Gegenständen und Verteilfahrzeugen unterschieden werden kann.

Diese Sicherheitsvorrichtung erweist sich als nachteilig, da eine Vielzahl von Sensoren an den Verteilfahrzeugen und den Regalen angeordnet werden müssen, um eine zuverlässige Funktionsweise zu garantieren. Die als Lichtschranken ausgebildeten Sensoren überwachen die Öffnungen der Lagergassen zumeist jedoch nur in bestimmten vorgewählten Höhen. Hierdurch ist es nachteiligerweise möglich, daß eine Bedienperson unter Umgehung der Sicherheitsvorrichtung in die Lagergasse hineingreifen kann, um beispielsweise einen Gegenstand zu entfernen.

Der Erfindung liegt die Aufgabe zugrunde, eine Sicherheitsvorrichtung für Regallager zu schaffen, die bei geringem Aufwand ein sicheres manuelles Kommissionieren von Lagergut aus einem an den Fahrweg eines Verteilfahrzeugs angrenzenden Regalfach ermöglicht.

Diese Aufgabe wird bei einer Sicherheitsvorrichtung gemäß dem Oberbegriff des Anspruches 1 durch die kennzeichnenden Merkmale des Anspruches 1 gelöst. Vorteilhafte Ausgestaltungen sind in den Unteransprüchen 2 bis 5 angegeben.

Die erfindungsgemäße Sicherheitsvorrichtung erreicht durch die Anordnung von Toren zwischen den Regalfächern und dem Fahrweg z.B. eines Regalbediengeräts, daß Personen, die aus dem Regalfach manuell kommissionieren, einerseits vor einem Eingreifen in den Fahrweg des Regalbediengeräts geschützt sind und andererseits ein Abrutschen von Lagergut in den Fahrweg des Regalbediengeräts vermieden wird. Als besonders vorteilhaft erweist sich, den Antrieb zum Öffnen und Schließen der Tore direkt an dem Regalbediengerät anzuordnen, wodurch nur ein Antrieb zum Öffnen der Vielzahl von Toren benötigt wird. Die Führung der Tore an Schienen, die mit dem Regal verbunden sind und vertikal ausgerichtet sind, erweist sich als vorteilhaft, da beim Öffnen der Tore ein Überschneiden derselben vermieden wird und hierdurch eine geringe Bautiefe erreicht wird. Die vertikal verschiebbare Anordnung der Tore, bei der in der Offenstellung die eine Ebene höherliegende Regalreihe verschlossen wird, ist möglich, da zumeist in Regallagern nur in der untersten Ebene von Hand kommissioniert wird. Der Aufbau des Antriebes aus einem Motor, der zwei umlaufende Ketten antreibt, die über Mitnehmer in eine korrespondierende Anschlagleiste an den Toren eingreifen können, erweist sich als konstruktiv einfache und zuverlässige Lösung.

Nachfolgend wird die Erfindung anhand eines in den Figuren dargestellten Ausführungsbeispieles näher erläutert. Es zeigen
- Fig. 1: eine Sicherheitsvorrichtung an einem Hochregallager mit einem Regalbediengerät,
- Fig. 2: einen an dem Regalbediengerät angeordneten Antrieb für ein Tor,
- Fig. 3: eine Seitenansicht von Fig. 2.

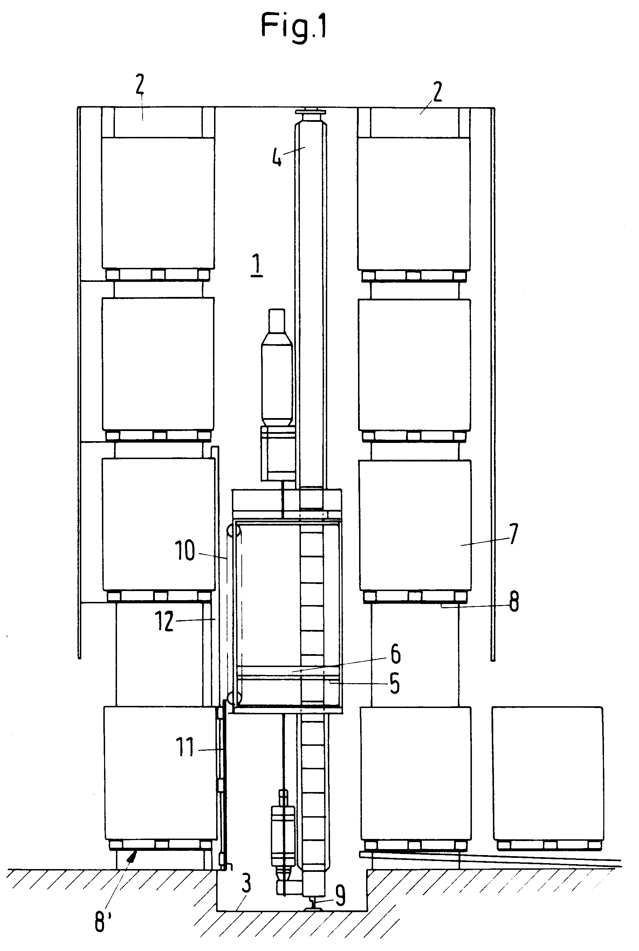

In Figur 1 ist als Verteilfahrzeug 1 ein Regalbediengerät dargestellt, das zwischen zwei Regalen 2, die einen gassenförmigen Fahrweg 3 bilden, auf einer Schiene 9 verfahrbar ist. Das Verteilfahrzeug 1 besteht im wesentlichen aus einem Mast 4, an dem vertikal verfahrbar eine Hubeinheit 5 geführt ist. Auf der Hubeinheit 5 ist eine Entnahmevorrichtung 6 zum Ein- und Auslagern von Lagergut 1 in bzw. aus einem Fach 8 des Regales 2 angeordnet. Der Mast 4 ist auf der Schiene 9 verfahrbar. Außerdem ist an der Hubeinheit 5 des Verteilfahrzeugs 1 ein Antrieb 10 angeordnet, der zur Betätigung einer als Tor 11 ausgebildeten Sicherheitsvorrichtung dient. Das Tor 11 ist an der dem Fahrweg 3 zugewandten Seite des Regal es 2 über Führungsschienen 12 an diesem geführt und schließt die Fächer 8' der untersten Reihe des Regales 2 gegenüber dem Fahrweg 3 ab. Diese Fächer 8' sind von der dem Fahrweg 3 gegenüberliegenden Seite des Regales von Personen zugänglich, die von Hand in den Fächern 8' kommissionieren. Zur Entnahme des Lagergutes 7 aus dieser begehbaren Reihe der Fächer 8' ist das Tor 11 (z.B. Verschlußelement in Wandform) von dem Antrieb 10 entlang der Führungsschienen 12 aus der Schließstellung in eine Offenstellung verfahrbar und wird von dem Antrieb 10 in der Offenstellung gehalten. Danach wird mittels der Entnahmevorrichtung 6 das Lagergut 8 aus dem Fach 8' auf die Hubeinheit 5 ausgelagert. Anschließend wird durch Betätigung des Antriebes 10 das Tor 11 wieder in seine Schließstellung abgesenkt.

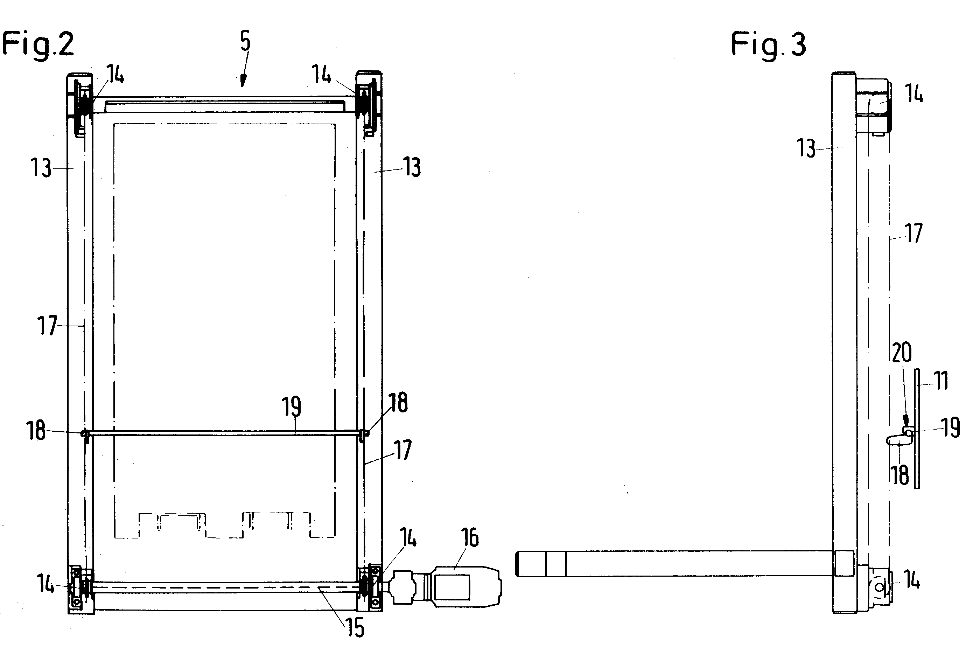

Die Figur 2 zeigt eine Ansicht einer Hubeinheit 5 mit dem Antrieb 10. An der Hubeinheit 5 sind auf der dem Fach 8' mit dem Tor 11 des Regales 2 zugewandten Seite zwei vertikal ausgerichtete Träger 13 befestigt, deren Abstand zueinander etwa der Breite eines Faches 8, 8' entspricht. An den Enden und auf der dem Regal 2 zugewandten Seite der Träger 13 ist jeweils ein Umlenkrad 14 gelagert. Die beiden unteren Umlenkräder 14 sind über eine Welle 15 miteinander verbunden, die von einem Motor 16, der sich am Rahmen 13 abstützt, angetrieben ist. Die Umlenkräder 14 sind um horizontale und quer zur Ein- bzw. Auslagerungsrichtung der Entnahmevorrichtung 6 ausgerichtete Achsen drehbar. Um die jeweils an einem Träger 13 angeordneten Umlenkräder 14 ist jeweils eine endlos umlaufende Kette 17 geführt. An den beiden Ketten 17 sind jeweils auf gleicher Höhe Mitnehmerelemente 18 angeordnet, die über eine Stange 19 miteinander verbunden sind.

Die Figur 3 zeigt eine Seitenansicht von Figur 2, wobei zusätzlich das Tor 11 dargestellt ist. Es ist ersichtlich, daß das Mitnehmerelement 18 hakenförmig ausgebildet ist, die Stange 19 an dem der Kette 13 abgewandten Ende des winkelförmigen Mitnehmerelementes 18 befestigt und somit von der Kette 17 beabstandet ist. Hierbei ist das freie Ende des Mitnehmerelementes 18 nach oben gerichtet. Das Mitnehmerelement 18 mit der Stange 19 wird zum Öffnen des Tores 11 von unten in eine korrespondierend ausgebildete Anschlagleiste 20 eingefahren. Die Anschlagleiste 20 ist am unteren Ende und an der dem Fahrweg zugewandten Seite des Tores 11 angeordnet und als Winkelleiste ausgebildet, deren freier Schenkel nach unten gerichtet ist.

Das Tor 11 kann sowohl vertikal (wie gezeichnet) als auch horizontal verschiebbar sein.

### Bezugszeichenliste

- 1: Verteilfahrzeug
- 2: Regal
- 3: Fahrweg
- 4: Mast
- 5: Hubeinheit
- 6: Entnahmevorrichtung
- 7: Lagergut
- 8,8': Fach
- 9: Schiene
- 10: Antrieb
- 11: Tor
- 12: Führungsschiene
- 13: Träger
- 14: Umlenkräder
- 15: Welle
- 16: Motor
- 17: Kette
- 18: Mitnehmerelement
- 19: Stange
- 20: Anschlagleiste

## Patentansprüche

1. Sicherheitsvorrichtung für Regallager, insbesondere Stollenlager, mit einem auf einem Fahrweg (3) an einem Regal (2) entlang verfahrbaren Verteilfahrzeug (1), insbesondere einem automatischen Regalbediengerät, zur Ein- und Auslagerung von Lagergut (7) in bzw. aus Fächern (8,8') des Regales (2),
dadurch gekennzeichnet,
daß die Fächer (8,8') der Regale (2) an der dem Fahrweg (3) zugewandten Seite jeweils mit einem Tor (11) verschließbar sind und an dem Verteilfahrzeug (1) ein Antrieb (10) zum Öffnen und Schließen der Tore (11) angeordnet ist.

2. Sicherheitsvorrichtung nach Anspruch 1,
dadurch gekennzeichnet,
daß die Tore (11) seitlich an Führungsschienen (12) geführt sind und deren Abstand zueinander etwa der Breite des Faches (8,8') entspricht und die Tore (11) aus einer Schließstellung von dem Antrieb (10) vertikal in eine Offenstellung hebbar sind.

3. Sicherheitsvorrichtung nach Anspruch 1 oder 2,
dadurch gekennzeichnet,
daß der Antrieb (10) als Kettentrieb mit Umlenkrädern (14) und Ketten (17) ausgebildet ist und an den Ketten (17) Mitnehmerelemente (18) angeordnet sind, die zum Öffnen und Schließen des Tores (11) in eine korrespondierend ausgebildete Anschlagleiste (20) einfahrbar sind und die Anschlagleiste (20) im Bereich des unteren Endes des Tores (11) angeordnet ist.

4. Sicherheitsvorrichtung nach Anspruch 3,
dadurch gekennzeichnet,
daß die Umlenkräder (14) jeweils an den Enden von Trägern (13) angeordnet sind, die in einem Abstand, der der Breite eines Faches (8,8') entspricht, zueinander angeordnet und vertikal ausgerichtet an dem Verteilfahrzeug (1) befestigt sind und der Abstand der Umlenkräder (14) an einem Träger (13) mindestens dem Weg zwischen der Schließ- und Offenstellung des Tores (11) entspricht.

5. Sicherheitsvorrichtung nach Anspruch 3 oder 4,
dadurch gekennzeichnet,
daß die Mitnehmerelemente (18) hakenförmig ausgebildet sind und die Mitnehmerelemente (18) an ihrem nach oben ragenden, freien Ende über eine Stange (19) miteinander verbunden sind.

## Claims

1. Safety device for shelf stores, in particular gallery stores, with a distributor vehicle (1), in particular an automatic shelf servicing apparatus, which can travel along a shelf unit (2) on a runway (3), for depositing stock (7) in compartments (8, 8') of the shelf unit (2) and removing it from these compartments,
characterised in that the compartments (8, 8') of the shelves (2) can each be closed by a gate (11) on the side which faces the runway (3), and a drive (10) for opening and closing the gates (11) is disposed on the distributor vehicle (1).

2. Safety device according to claim 1,
characterized in that the gates (11) are guided at the sides on guide rails (12), the spacing between them corresponds approximately to the width of the compartment (8, 8') and they can be raised vertically by the drive (10) from a closed position into an open position.

3. Safety device according to claim 1 or 2,
characterised in that the drive (10) is formed as a chain drive with guide wheels (14) and chains (17), engaging elements (18) are disposed on the chains (17), which elements can be inserted in a correspondingly formed stop strip (20) to open and close the gate (11), and the stop strip (20) is disposed in the region of the bottom end of the gate (11).

4. Safety device according to claim 3,
characterised in that the guide wheels (14) are each disposed at the ends of carriers (13), the spacing between which corresponds to the width of a compartment (8, 8') and which are attached to the distributor vehicle (1) so as to extend vertically, and the spacing of the guide wheels (14) on a carrier (13) corresponds at least to the distance between the closed and the open position of the gate (11).

5. Safety device according to claim 3 or 4,
characterized in that the engaging elements (18) are hook-shaped and are connected together at their upward projecting, free ends via a rod (19).

## Revendications

1. Dispositif de sécurité pour un stock à rayonnages, en particulier un stock à galeries, comportant un véhicule de distribution (1), en particulier un appareil de service de stock automatique, pouvant être déplacé sur une voie de roulement (3) le long d'un rayonnage (2), pour stocker et déstocker du produit de stockage (7) de compartiments (8,8') du rayonnage (2),
caractérisé en ce que les compartiments (8,8') des rayonnages (2) peuvent être fermés, sur la face en regard de la voie de roulement (3), à chaque fois par une porte (11) et un entraînement (10) pour ouvrir et fermer les portes (11) est agencé sur le véhicule de distribution (1).

2. Dispositif de sécurité selon la revendication 1,
caractérisé en ce que les portes (11) sont guidées latéralement sur des rails de guidage (12), dont l'écartement réciproque correspond à peu près à la largeur du compartiment (8,8'), et les portes (11) peuvent être soulevées d'une position de fermeture, par l'entraînement (10), verticalement dans une position d'ouverture.

3. Dispositif de sécurité selon l'une des revendications 1 ou 2,
caractérisé en ce que l'entraînement (10) est réalisé sous forme d'un entraînement à chaînes comportant des roues de renvoi (14) et des chaînes (17) et des éléments d'entraînement (18) sont agencés sur les chaînes (17), éléments d'entraînement qui peuvent être introduits, pour ouvrir et fermer la porte (11), dans un battement (20) réalisé en correspondance, et le battement (20) est agencé dans la zone de l'extrémité inférieure de la porte (11).

4. Dispositif de sécurité selon la revendication 3,
caractérisé en ce que les roues de renvoi (14) sont agencées à chaque fois aux extrémités de supports (13) qui sont agencés réciproquement avec un écartement correspondant à la largeur d'un compartiment (8,8') et sont fixés en étant orientés verticalement sur le véhicule de distribution (1), et l'écartement des roues de renvoi (14) sur un support (13) correspond au moins à la voie entre la position de fermeture et la position d'ouverture de la porte (11).

5. Dispositif de sécurité selon l'une des revendications 3 ou 4,
caractérisé en ce que les éléments d'entraînement (18) sont réalisés en forme de crochet, et les éléments d'entraînement (18) sont reliés ensemble, à leur extrémité libre faisant saillie vers le haut, par l'intermédiaire d'une barre (19).
